# FASCICULE DE BREVET EUROPEEN

(11) **EP 2 264 555 B1**
(45) Date de publication et mention de la délivrance du brevet: **25.04.2012**
(21) Numéro de dépôt: 09162869.3
(22) Date de dépôt: 16.06.2009
(51) Int. Cl.: G04C 10/00, H02K 1/27, H02K 7/18, H02K 37/12, H02K 21/24

(54) **Transducteur électromécanique de petites dimensions, notamment génératrice horlogère**
Kleiner elektromechanischer Signalwandler, insbesondere Uhrgenerator
Small electromechanical transducer, in particular a timepiece generator

(43) Date de publication de la demande: 22.12.2010
(73) Titulaire: ETA SA Manufacture Horlogère Suisse, 2540 Grenchen (CH)
(72) Inventeur: Schönherr, Uwe, 4528, Zuchwil (CH); Berthoud, Joerg, 2613, Villeret (CH)
(74) Mandataire: Surmely, Gérard

(56) Documents cités:
- EP-B- 1 366 391
- DE-A1- 1 811 389

## Description

La présente invention concerne un transducteur électromécanique formé d'un rotor présentant une pluralité de pôles magnétiques et d'au moins une bobine plate (relativement faible hauteur) agencée de manière que les pôles magnétiques du rotor passent en regard de cette au moins une bobine lorsqu'il tourne.

En particulier, le transducteur électromécanique définit une génératrice horlogère, c'est-à-dire une génératrice de petites dimensions ou micro-génératrice magnéto-électrique.

La génératrice horlogère selon l'invention est destinée à être incorporée dans un mouvement horloger du type décrit notamment dans les documents EP 239 820 ou EP 679 968.

Le document WO 2009/001917 une génératrice comprenant un rotor avec un premier, un deuxième et un troisième disque entraînant un axe (11). Chaque disque contient des aimants espacés de manière régulières interagissant avec une pluralité de bobines (16).

Une génératnce à rotor multipolaire du type susmentionné est décrite dans le modèle d'utilité allemand DE 1811389 (U). Cette génératrice comprend un rotor formé par un arbre central portant deux flasques en matériau magnétique à la périphérie desquelles sont agencés des aimants permanents, six par flasque avec une alternance de la polarité. Le rotor comprend donc douze très petits aimants qui sont fixés individuellement à l'une des deux flasques magnétiques du rotor. La génératrice comprend également deux ou trois bobines plates agencées avec un décalage angulaire de 120° par rapport à l'axe de rotation de la génératrice. Lorsque le rotor tourne, les aimants permanents passent en regard des bobines. Dans le mode de réalisation représenté, il est prévu que l'axe central des aimants passe sensiblement par l'axe central des bobines. En tournant, le rotor induit ainsi un courant électrique dans les bobines, ce courant servant à l'alimentation d'un circuit électronique d'un mouvement horloger. Cette énergie électrique peut être stockée dans une batterie rechargeable ou dans une capacité de stockage.

La génératrice divulguée dans le document DE 1811389 (U) permet certes de produire efficacement un courant électrique pour l'alimentation d'un circuit électronique horloger et de commander une telle génératrice pour qu'elle tourne à vitesse constante de manière synchrone avec une base de temps qu'elle alimente. Cependant, cette génératrice présente divers inconvénients majeurs. Premièrement, sa fabrication est relativement complexe et onéreuse. Il faut en effet fournir douze très petits aimants qui doivent être fixés individuellement de manière uniforme en périphérie des deux flasques magnétiques du rotor. Ensuite, cette génératrice présente une relativement grande inertie avec les deux flasques en forme de disque portant chacun à sa périphérie six aimants. Plus l'inertie est élevée, plus la génératrice est sensible aux chocs (ce qui nécessite qu'elle tourne à une certaine vitesse pour éviter qu'un choc ne l'arrête). On notera encore que le couple de démarrage est aussi relativement élevé tout comme le couple minimal nécessaire à son fonctionnement synchrone.

Le but de la présente invention est de fournir un transducteur électromécanique, en particulier pour des applications du type horloger, qui apporte une solution aux problèmes susmentionnés de l'art antérieur, tout en conservant une bonne efficacité de fonctionnement.

A cet effet, la présente invention concerne un transducteur électromécanique tel que définit à la revendication 1. Ce transducteur se caractérise en particulier par le fait qu'il est formé de trois parties en matériau magnétique présentant chacune des languettes définissant les pôles magnétiques du rotor. Deux aimants permanents bipolaires de relativement grandes dimensions par rapport à ceux de l'art antérieur sont agencés avec une polarité inversée de manière coaxiale à l'axe de rotation du rotor et intercalés entre les trois parties magnétiques susmentionnées. Les languettes de chaque partie magnétique s'étendent radialement et présentent entre elles un décalage angulaire sensiblement constant. La partie magnétique intermédiaire présente la particularité d'avoir une partie de ses languettes pliées de manière que leurs zones d'extrémité respectives soient agencées sensiblement dans un premier plan supérieur dans lequel sont situées les languettes de la première partie magnétique, alors que l'autre moitié des languettes de cette partie intermédiaire sont pliées de manière que leurs extrémités respectives soient situées dans un deuxième plan inférieur dans lequel sont situées les languettes de la troisième partie magnétique. Ce transducteur comprend au moins une bobine agencée entre le plan supérieur et le plan inférieur du rotor de manière que, lorsque ce rotor tourne, les zones d'extrémité des languettes passent en regard de cette au moins une bobine.

Grâce aux caractéristiques du transducteur selon l'invention, le nombre d'aimants permanents nécessaire est réduit fortement, quel que soit le nombre de pôles magnétiques du rotor. En effet, le rotor comprend seulement deux aimants permanents indépendamment du nombre de pôles magnétiques du rotor. Le flux des aimants se répartit dans les languettes et se referme par les régions d'extrémité des languettes supérieures et inférieures agencées les unes en regard des autres. Toutes les parties du rotor peuvent être fabriquées à moindre coût et l'assemblage de ces parties est relativement aisé. De fait, les trois flasques magnétiques et les deux aimants bipolaires du rotor sont simplement empilés l'un sur l'autre. Le rotor de la génératrice peut ainsi être produit pour un coût réduit. Ensuite, du fait que les deux aimants bipolaires de relativement grandes dimensions sont agencés coaxialement à l'axe de rotation du rotor, la majeure partie de la masse du rotor est concentrée dans la zone centrale de celui-ci. Ainsi, l'inertie du rotor de la génératrice selon la présente invention est inférieure à celle du rotor de l'art antérieur décrit précédemment. Le couple de démarrage de la présente génératrice est plus faible et cette génératrice est moins sensible aux chocs. De plus, la génératrice peut tourner de manière synchrone avec un couple fourni par un barillet du mouvement horloger qui est inférieur au couple minimum nécessaire pour la génératrice de l'art antérieur. Par conséquent, pour un barillet donné, sans remontage intermédiaire, la durée de fonctionnement synchrone du mouvement horloger est augmentée avec la génératrice selon la présente invention.

Un mode de réalisation préféré sera décrit ci-après en détail à l'aide de la description suivante, faite en référence aux dessins annexés donnés à titre d'exemple nullement limitatif, dans lesquels :
- la figure 1 est une vue éclatée en perspective du rotor du transducteur selon un mode de réalisation préféré de la présente invention ;
- la figure 2 est une vue de dessus du transducteur selon ledit mode préféré de réalisation ; et
- la figure 3 est une vue schématique en coupe selon la ligne III-III de la figure 2.

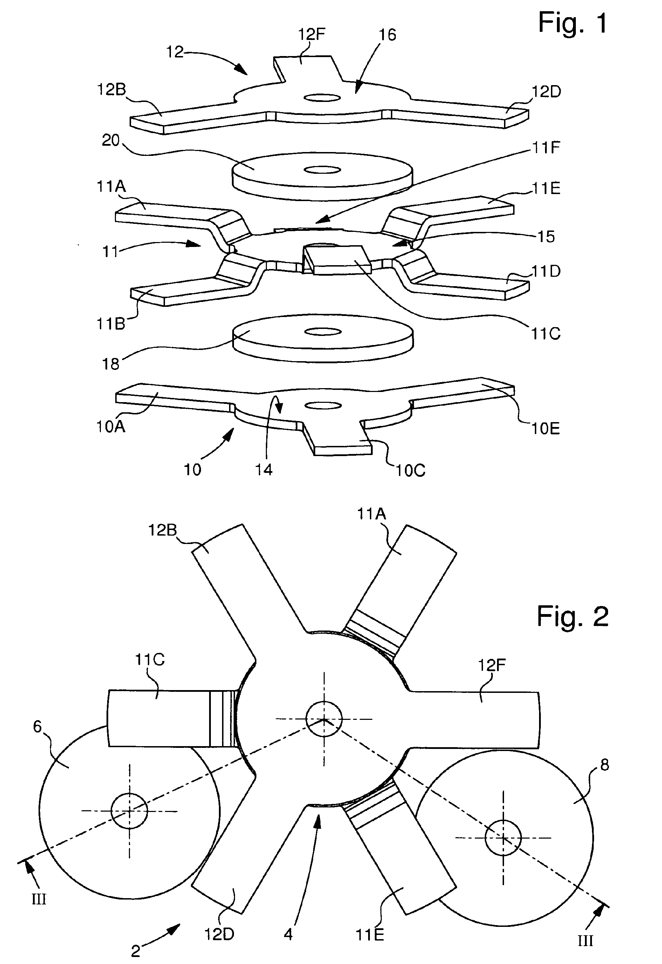

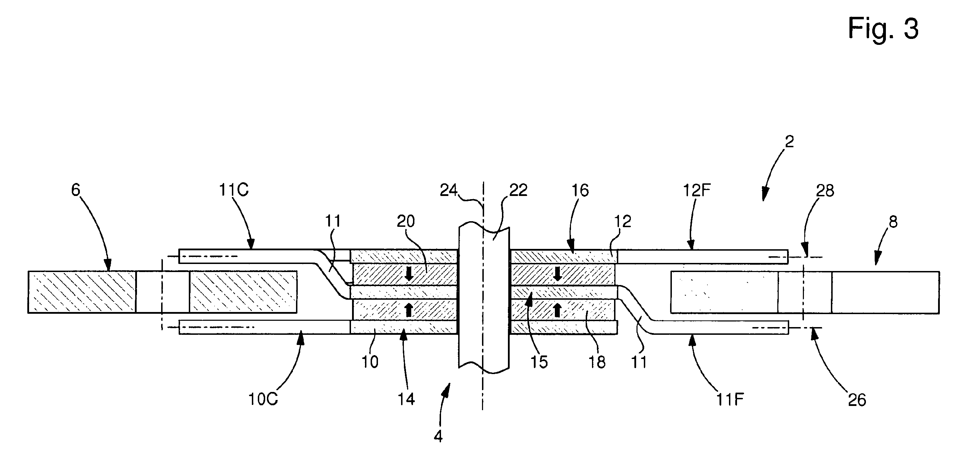

A l'aide des figures 1 à 3 on décrira ci-après un mode de réalisation préféré d'un transducteur électromécanique du type horloger selon l'invention. En particulier, ce transducteur forme une génératrice magnéto-électrique 2. Cette génératrice 2 comprend un rotor 4 et deux bobines plates 6 et 8. On notera de suite que dans une première variante, il est prévu une seule bobine 6 alors que dans une deuxième variante il est prévu d'agencer trois bobines décalées angulairement de 120°. Les bobines 6 et 8 présentent un décalage angulaire de 120° relativement à l'axe de rotation 24 du rotor 4.

Le rotor 4 est formé de première, deuxième et troisième parties 10, 11 et 12 en matériau magnétique. La première partie magnétique 10 est formée par une structure plane définissant une première zone centrale 14 et trois languettes 10A, 10C et 10E qui s'étendent radialement depuis la zone centrale 14. Les trois languettes sont agencées de manière uniforme avec un décalage angulaire sensiblement égal à 120°. La partie magnétique 10 définit ainsi une plaque inférieure découpée de manière à présenter une zone centrale circulaire et trois languettes s'étendant radialement depuis cette zone centrale. La troisième partie magnétique 12 est identique à la partie magnétique 10. Ainsi, la partie magnétique 12 comprend une zone centrale 16 de forme circulaire et trois languettes 12B, 12D et 12F s'étendant radialement depuis la zone centrale. La partie magnétique 12 définit une plaque supérieure découpée de manière à définir une zone centrale et trois languettes qui présentent une répartition uniforme autour de cette zone centrale.

En projection dans un plan géométrique perpendiculaire à l'axe de rotation 24, les languettes de la partie inférieure 10 présentent un décalage angulaire de 60° relativement aux languettes de la partie supérieure 12. Ainsi, en projection dans ledit plan géométrique, les languettes des parties inférieure et supérieure définissent six directions radiales réparties de manière uniforme, c'est-à-dire présentant entre elles un décalage angulaire sensiblement constant. La deuxième partie magnétique 11 définit une partie intermédiaire entre les parties inférieure et supérieure. Cette partie intermédiaire comprend une zone centrale 15 de laquelle partent six languettes. Cette partie intermédiaire se distingue par le fait que la moitié des languettes 11 B, 11 D et 11 F, décalées de 120° l'une relativement à l'autre, sont pliées vers le bas de manière que leurs zones d'extrémité respectives sont agencées sensiblement dans un premier plan géométrique 26 dans lequel est agencé la plaque plane 10 et en particulier ses languettes. Les languettes 11 B, 11 D et 11 F de la partie 11 sont situées entre les languettes 10A, 10C et 10E de la partie inférieure 10 de manière à définir six pôles magnétiques ayant une polarité alternée et répartis régulièrement autour de l'axe 24 dans le plan inférieur 26. La partie intermédiaire 11 comprend encore trois languettes 11 A, 11 C et 11 E, décalées de 120° l'une relativement à l'autre, qui sont pliées vers le haut de manière que leurs zones d'extrémité respectives soient agencées sensiblement dans un deuxième plan géométrique 28 dans lequel est situé la partie 12 et en particulier ses languettes. Les languettes 11 A, 11C et 11 E de la partie intermédiaire 11 sont situées entre les languettes 12B, 12D et 12F de la partie supérieure 12 de manière à définir six pôles magnétiques ayant une polarité alternée et répartis régulièrement autour de l'axe 24 dans le plan supérieur 28. Les trois languettes inférieures 11 B, 11 D et 11 F de la partie intermédiaire sont situées respectivement en face des trois languettes 12B, 12D et 12F de la partie supérieure 12. De même, les trois languettes supérieures 11 A, 11C et 11 E de la partie intermédiaire sont situées respectivement en face des trois languettes 10A, 10C et 10E de la partie inférieure 10.

Un premier aimant bipolaire 18 polarisé axialement est agencé entre les première et deuxième zones centrales 14 et 15. Un second aimant bipolaire 20, polarisé selon un sens opposé à celui du premier aimant, est agencé entre les zones centrales 15 et 16. Ainsi, les paires de languettes situées l'une en face de l'autre présentent des polarités magnétiques opposées et définissent les pôles magnétiques du rotor. De même, deux languettes adjacentes dans le plan géométrique 26 ou 28 ont des polarités magnétiques opposées. Les deux bobines 6 et 8 sont agencées entre les premier et deuxième plans 26 et 28 de manière que, lorsque le rotor 4 tourne, les zones d'extrémité des languettes de ce rotor passent en regard des deux bobines.

On notera encore que les trois zones centrales respectives des trois parties magnétiques du rotor sont superposées l'une à l'autre et que les deux aimants 18 et 20 sont coaxiaux à ces zones centrales. Le montage du rotor peut se faire aisément par un simple empilement des cinq éléments représentés à la figure 1 et décrits en détail ci-avant. Ces cinq éléments sont montés sur un arbre central 22.

Le mode de réalisation préféré décrit ci-avant comporte des parties inférieure et supérieure ayant chacune trois languettes alors que la partie intermédiaire présente six languettes. Selon d'autres modes de réalisation et de manière générale, le nombre de languettes des parties inférieure et supérieure est égal à N, N étant supérieur à 1 (N>1). Ces N languettes sont agencées avec une répartition uniforme autour d'une zone centrale et s'étendent radialement depuis cette zone centrale comme dans le mode préféré représenté aux figures. La partie intermédiaire comprend alors 2N languettes dont N premières languettes sont pliées vers le bas de manière que leurs zones d'extrémité respectives soient agencées sensiblement dans un premier plan inférieur dans lequel sont situées les languettes de la partie inférieure. Les N autres languettes restantes sont pliées vers le haut de manière que leurs zones d'extrémité respectives soient agencées sensiblement dans un deuxième plan supérieur dans lequel sont situées les languettes de la partie supérieure. Le rotor présente ainsi 2N paires de pôles, chaque paire de pôles étant définie respectivement par deux extrémités de languettes situées l'une en face de l'autre.

## Revendications

1. Transducteur électromécanique (2) formé d'un rotor (4) et d'au moins une bobine (6,8), le rotor étant formé de première, deuxième et troisième parties (10, 11,12) en matériau magnétique ayant respectivement des première, deuxième et troisième zones centrales superposées (14,15,16), **caractérisé en ce qu'**un premier aimant bipolaire(18) polarisé axialement est agencé entre les première et deuxième zones centrales et un second aimant bipolaire (20) polarisé axialement selon un sens opposé à celui du premier aimant est agencé entre les deuxième et troisième zones centrales, les première et troisième parties comprenant chacune N languettes, N étant un nombre supérieur à un (N>1), qui s'étendent radialement et régulièrement depuis leur zone centrale et la deuxième partie comprenant 2N languettes dont N premières languettes sont pliées de manière que leurs zones d'extrémité respectives soient agencées sensiblement dans un premier plan géométrique (26) dans lequel sont situés les languettes de ladite première partie et dont N secondes languettes sont pliées de manière que leurs zones d'extrémité respectives soient agencées sensiblement dans un deuxième plan géométrique (28) dans lequel sont situées les languettes de ladite troisième partie, les N premières languettes de la deuxième partie étant situées respectivement en face des N languettes de la troisième partie et les N secondes languettes de cette deuxième partie étant situées en face des N languettes de la première partie, ladite au moins une bobine étant située entre les premier et deuxième plans géométriques du rotor de manière que, lorsque le rotor tourne, les zones d'extrémité des languettes du rotor passent en regard de cette au moins une bobine.

2. Transducteur électromécanique selon la revendication 1, **caractérisé en ce que** les première et troisième parties (10,12) du rotor sont planes avec un découpage identique.

3. Transducteur électromécanique selon la revendication 1 ou 2, **caractérisé en ce que** le nombre N de languettes des première et troisième parties est égal à trois et le nombre 2N de languettes de la deuxième partie étant égal à six.

4. Transducteur électromécanique selon la revendication 3, **caractérisé en ce qu'**il comprend deux bobines (6, 8) décalées angulairement de 120°.

## Claims

1. Electromechanical transducer (2) formed of a rotor (4) and at least one coil (6, 8), the rotor being formed of first, second and third parts (10, 11, 12) made of magnetic material with respectively first, second and third superposed central zones (14, 15, 16), **characterized in that** a first, axially polarised, bipolar magnet (18) is arranged between the first and second central zones and a second bipolar magnet (20), axially polarised in an opposite direction to that of the first magnet is arranged between the second and third central zones, the first and third parts each including N tongues, where N is a number greater than one (N>1), which extend radially and regularly from the central zone and the second part including 2N tongues, of which N first tongues are folded such that their respective end zones are arranged approximately in a first geometrical plane (26) in which the tongues of said first part are located, and of which N second tongues are folded such that their respective end zones are arranged approximately in a second geometrical plane (28) in which the tongues of said third part are located, the N first tongues of the second part being located respectively opposite the N tongues of the third part and the N second tongues of said second part being located opposite the N tongues of the first part, said at least one coil being located between the first and second geometrical planes of the rotor such that, when the rotor is rotating, the end zones of the rotor tongues pass opposite said at least one coil.

2. Electromechanical transducer according to claim 1, **characterized in that** the first and third parts (10, 12) of the rotor are flat and cut in an identical manner.

3. Electromechanical transducer according to claim 1 or 2, **characterized in that** the number N of tongues of the first and third parts is equal to three and the number 2N of tongues of the second part is equal to six.

4. Electromechanical transducer according to claim 3, **characterized in that** it includes two coils (6, 8) angularly shifted by 120°.

## Patentansprüche

1. Elektromechanischer Wandler (2), welcher von einem Rotor (4) und von zumindest einer Spule (6, 8) gebildet ist, wobei der Rotor aus ersten, zweiten und dritten Abschnitten (10, 11, 12) aus magnetischem Material gebildet ist, welche entsprechende erste, zweite und dritte übereinander liegende zentrale Zonen (14, 15, 16) aufweisen, **dadurch gekennzeichnet, dass** ein erster bipolarer Magnet (18), axial polarisiert und zwischen der ersten und der zweiten zentralen Zone angeordnet ist und wobei ein zweiter bipolarer Magnet (20), welcher entgegen der Richtung des ersten Magnets axial polarisiert ist, zwischen der zweiten und der dritten zentralen Zonen angeordnet ist, wobei jede der ersten und zweiten Abschnitte N Zungen aufweisen, wobei N eine ganze Zahl größer 1 (N > 1) ist, welche sich radial und regelmäßig von der zentralen Zone weg erstrecken, und wobei der zweite Abschnitt 2N Zungen aufweist, von denen N erste Zungen derart gebogen sind, dass deren entsprechende Endabschnitte im Wesentlichen in einer geometrischen Ebene (26) angeordnet sind, in welcher die Zungen des ersten Abschnittes liegen und von denen N zweite Zungen derart gebogen sind, dass deren entsprechende Endabschnitte im Wesentlichen in einer zweiten geometrischen Ebene (28) angeordnet sind, in welcher sich die Zungen des dritten Abschnitts befinden, wobei die N ersten Zungen des zweiten Abschnitts vor den N Zungen des dritten Abschnitts und den N zweiten Zungen des zweiten Abschnitts vor den N Zungen des ersten Abschnitts liegen, wobei die zumindest eine Spule zwischen der ersten und der zweiten geometrischen Ebene des Rotors derart angeordnet ist, dass bei einer Drehung des Rotors die Endabschnitte der Zungen des Rotors die zumindest eine Spule passieren.

2. Elektromechanischer Wandler nach Anspruch 1, **dadurch gekennzeichnet, dass** die ersten und die dritten Abschnitte (10, 12) des Rotors identisch aufgeteilt und flach sind.

3. Elektromechanischer Wandler nach Anspruch 1 oder 2, **dadurch gekennzeichnet, dass** die Anzahl N der Zungen der ersten und dritten Abschnitte gleich drei und die Anzahl 2N der Zungen des zweiten Abschnitts gleich sechs ist.

4. Elektromechanischer Wandler nach Anspruch 3, **dadurch gekennzeichnet, dass** er zwei Spulen (6, 8) aufweist, die um 120° gedreht sind.
